# EUROPÄISCHE PATENTSCHRIFT

(11) **EP 2 253 499 B1**
(45) Veröffentlichungstag und Bekanntmachung des Hinweises auf die Patenterteilung: **11.07.2012**
(21) Anmeldenummer: 10005155.6
(22) Anmeldetag: 18.05.2010
(51) Int. Cl.: B60K 28/06, B62D 1/28, B62D 6/00, B62D 15/02, B60W 50/08

(54) **Kraftfahrzeug mit einem Fahrerassistenzsystem zur Querführung des Kraftfahrzeugs und Verfahren zur Unterstützung eines Fahrers eines Kraftfahrzeugs beim Halten einer Fahrspur**
Car with a driver assistance system for transverse guidance of the car and procedure for assisting a driver of a car while keeping to a lane
Véhicule automobile doté d'un système d'assistance au conducteur pour le guidage latéral du véhicule automobile et procédé destiné à l'assistance au conducteur du véhicule automobile lors de l'arrêt d'une voie de circulation

(30) Priorität: 20.05.2009 DE 102009022055
(43) Veröffentlichungstag der Anmeldung: 24.11.2010
(73) Patentinhaber: Audi AG, 85045 Ingolstadt (DE)
(72) Erfinder: Limbacher, Reimund, 85055 Ingolstadt (DE)
(74) Vertreter: Thielmann, Frank

(56) Entgegenhaltungen:
- EP-A1- 1 726 513
- EP-A2- 1 275 573
- WO-A1-2009/022947
- DE-A1-102004 051 963
- US-A1- 2005 030 184
- US-A1- 2005 228 588

## Beschreibung

Die Erfindung betrifft ein Kraftfahrzeug, umfassend ein Fahrerassistenzsystem zur Querführung des Kraftfahrzeugs, insbesondere ein Spurhalteassistenzsystem, welches Fahrerassistenzsystem zum Erzeugen eines Gegenlenkmomentes bei einem erkannten Verlassen der Spur durch das Kraftfahrzeug ausgebildet ist, welches Gegenlenkmoment durch eine gegebenenfalls schwellwertbasierte Aktion, insbesondere ein Handlenkmoment, des Fahrers deaktivierbar und/oder übersteuerbar ist, sowie ein zugehöriges Verfahren.

Fahrerassistenzsysteme zur Querführung des Kraftfahrzeugs sind im Stand der Technik heute weithin bekannt. Insbesondere Spurhalteassistenzsysteme, beispielsweise die sogenannten "Lane-Departure-Warning"-Systeme und die "Lane-Keeping-Assistence"-Systeme (LKA-Systeme), werden immer häufiger genutzt. Während LDW-Systeme eine Warnung ausgeben, wenn ein Verlassen der Fahrspur erkannt wird, stellen LKA-Systeme einen tatsächlichen Querführungseingriff, nämlich ein Gegenlenkmoment, zur Verfügung, versuchen also aktiv, ein Halten der Spur zu ermöglichen. Fahrerassistenzsysteme zur Querführung des Kraftfahrzeugs treten zu einem bestimmten Warn- bzw. Eingriffszeitpunkt in Aktion, der auf verschiedene Art und Weise ermittelt werden kann. Beispielsweise ist es bekannt, die Zeit bis zum Verlassen der Fahrspur zu ermitteln und bei Unterschreiten einer gewissen Grenze die Aktion auszulösen. Analog kann auch der Abstand zu einer Spurbegrenzung oder auch die Fahrtstrecke bis zu einer Spurbegrenzung von ausgezeichneten Punkten des Kraftfahrzeugs betrachtet werden.

Fahrerassistenzsysteme zur Querführung des Kraftfahrzeugs umfassen neben einem Steuergerät dabei Sensoren, insbesondere eine Kamera, deren Signale - gegebenenfalls mit anderen den Betriebszustand des Kraftfahrzeugs beschreibenden Parametern - ausgewertet werden, wobei für den Wam- bzw. Eingriffszeitpunkt beispielsweise Eingangsgrößen wie Spurbreite, die Spurkrümmung und die laterale Fahrzeuggeschwindigkeit sowie der Gierwinkel zur Spurmarkierung berücksichtigt werden können.

Bei Fahrerassistenzsystemen zur Querführung des Kraftfahrzeugs, die zum Erzeugen eines Gegenlenkmomentes bei einem erkannten Verlassen der Spur durch das Kraftfahrzeug ausgebildet sind, ist es bekannt, diese so auszulegen, dass ein Lenkeingriff des Fahrerassistenzsystems leicht durch eine Aktion des Fahrers reduziert oder ganz abgebrochen werden kann, beispielsweise, wenn der Fahrer einen Spurwechsel ohne Betätigung des Fahrtrichtungsanzeigers durchführt. Beispielsweise kann vorgesehen sein, dass der Fahrer als Aktion einen gegengerichteten Lenkeingriff durchführt, mithin ein Handlenkmoment erzeugt, welches dann entweder, beispielsweise falls es einen Schwellwert überschreitet, zum Abbruch des Lenkeingriffs des Fahrerassistenzsystems führt oder zur Übersteuerung des Gegenlenkmoments dient. Der Fahrer ist also jederzeit in der Lage, einen korrigierenden Querführungseingriff des Fahrerassistenzsystems durch eigene Aktionen zu beenden oder diesem entgegenzuwirken.

Dies ist insbesondere in solchen Fällen problematisch, in denen ein solches Verlassen der Fahrspur nicht anzuraten ist oder der Fahrer gar übermüdet ist. Derlei weiterführende Informationen werden nachteilhafterweise nicht ausreichend berücksichtigt.

Das Dokument WO 2009/022947 A1 ist als nächstliegender Stand der Technik nach dem Oberbegriff des Anspruchs 1 zu sehen.

Der Erfindung liegt daher die Aufgabe zugrunde, ein Kraftfahrzeug sowie ein Verfahren anzugeben, das eine verbesserte Berücksichtigung des Fahrerzustands und der Umgebung der Fahrspur ermöglicht.

Zur Lösung dieser Aufgabe ist bei einem Kraftfahrzeug der eingangs genannten Art erfindungsgemäß vorgesehen, dass das Fahrerassistenzsystem bei Vorliegen eines wenigstens ein außerhalb der aktuell befahrenen Spur befindliches, relevantes Objekt benachbart zu einer Spurmarkierung der aktuellen Spur anzeigenden Objektsignals und/oder eines einen Grenzwert unterschreitenden Aufmerksamkeitswertes für den Fahrer des Kraftfahrzeugs zur Erhöhung des Schwellwerts und/oder zu einer geringeren Anrechnung der Aktion zur Übersteuerung und/oder zur Ausgabe einer Warnung parallel zu dem Gegenlenkmoment ausgebildet ist.

Das Fahrerassistenzsystem zur Querführung des Kraftfahrzeugs, insbesondere das Spurhalteassistenzsystem, umfasst also neben seinem Steuergerät, den üblichen Sensoren und den üblichen Kommunikationsverbindungen die Möglichkeit, ein Objektsignal oder einen Aufmerksamkeitswert für den Fahrer des Kraftfahrzeugs zu ermitteln und/oder zu empfangen, um diese Informationen bei Erreichen eines Eingriffszeitpunkts im Hinblick auf entsprechende Modifikationen zu nutzen. Das Objektsignal betrifft dabei erhabene Objekte direkt neben einer erkannten Spurmarkierung, also Objekte, die sich neben der aktuell befahrenen Spur, aber in relevanter Nähe zu derselben, befinden. Als Beispiele seien auf Nachbarspuren befindliche Fahrzeuge oder Gegenstände sowie neben einer Fahrspur befindliche Leitplanken oder Vegetation genannt. Solche Objekte sind insbesondere dann relevant, wenn sie sich in einem bestimmten longitudinalen Entfernungsbereich zum eigenen Kraftfahrzeug befinden, so dass insbesondere bei lateralem Annähern des eigenen Kraftfahrzeugs an die Fahrspurmarkierung und Passieren derselben eine Kollision mit dem Objekt droht. Es kann also vorteilhaft vorgesehen sein, dass das Fahrerassistenzsystem zur Berücksichtigung des Objektsignals nur bei einer ermittelten möglichen Kollision mit dem Objekt ausgebildet ist. Bei Vorliegen solcher Objekte besteht demnach eine Gefahrenquelle, die erfindungsgemäß berücksichtigt wird. Eine weitere Gefahrenquelle ist zu niedriger Aufmerksamkeitsgrad des Fahrers, der in einem zu berücksichtigenden Aufmerksamkeitswert abgebildet wird.

Die Idee der vorliegenden Erfindung ist es nun, zum Eingriffszeitpunkt (wie einleitend bereits dargelegt beispielsweise bei Unterschreiten einer Grenze durch die Zeit bis zum Überfahren einer Fahrspurmarkierung oder auch eines Abstands zu einer Fahrspurmarkierung) die vom Fahrerassistenzsystem durchgeführten Maßnahmen so zu verändern und/oder zu erweitern, dass zum einen der Fahrer auf die erhöhte Gefahrensituation hingewiesen bzw. seiner Müdigkeit eher bewusst wird und/oder eine Deaktivierung oder Übersteuerung wenigstens erschwert wird.

Dafür kann zum einen die Deaktivierung und/oder Übersteuerung erschwert werden, das bedeutet, es kann der Schwellwert zur Deaktivierung durch die fahrerseitige Aktion erhöht und/oder die Aktion geringer zur Übersteuerung angerechnet werden. So wird im Sinne einer erhöhten Fahrsicherheit eine Übersteuerung oder Deaktivierung durch den Fahrer, insbesondere durch sein Gegenlenken gegen das Gegenlenkmoment, aufwendiger gestaltet, so dass mit größerer Wahrscheinlichkeit davon ausgegangen werden kann, dass sich der Fahrer der Konsequenzen seiner Aktion bewusst wird - auch diese Erschwerung der Deaktivierung bzw. Übersteuerung erfüllt also eine Hinweisfunktion.

Alternativ oder zusätzlich kann parallel zum Gegenlenkmoment eine spezielle Warnung ausgegeben werden, die den Fahrer deutlich auf sein Verlassen der Spur bzw. eine erhöhte Gefahr hinweist.

Es sei an dieser Stelle nochmals auf drei mögliche Varianten der Berücksichtigung der fahrerseitigen Aktion eingegangen. So kann vorgesehen sein, dass das Fahrerassistenzsystem zum Vergleich des Schwellwerts mit einem absoluten Wert für das Handlenkmoment oder einem Differenzbetrag zwischen dem Gegenlenkmoment und dem Handlenkmoment ausgebildet ist. Versucht also der Fahrer trotz des Gegenlenkmoments die Fahrspur durch einen eigenen Lenkeingriff, das Handlenkmoment, zu verlassen, kann in einer ersten Variante überprüft werden, ob das Handlenkmoment selber einen bestimmten Schwellwert überschreitet. Ist dies der Fall, wird das Gegenlenkmoment, gegebenenfalls gerampt, deaktiviert. Statt dem Betrag des Handlenkmoments selber kann jedoch auch der Betrag der Differenz zwischen dem Handlenkmoment und dem Gegenlenkmoment betrachtet werden, wenn die Stärke des fahrerassistenzsystemseitigen Lenkeingriffs berücksichtigt werden soll. Auch hier kann ein Schwellwert vorgesehen sein. Dieser Schwellwert kann nun erfindungsgemäß erhöht werden, wenn der Fahrer unaufmerksam ist oder Gefahr durch erhabene Objekte nahe der Fahrspurmarkierung droht. In der dritten Variante kann vorgesehen sein, dass das Handlenkmoment - insbesondere anteilig - von dem Gegenlenkmoment subtrahiert wird, um die Übersteuerung zu ermöglichen. Dann kann bei Vorliegen des Objektsignals bzw. bei Unterschreiten des Grenzwerts durch den Aufmerksamkeitswert eine geringere Anrechnung erfolgen. Wird also beispielsweise das Handlenkmoment normalerweise zu 100 % beachtet, so kann vorgesehen sein, dass das Handlenkmoment in den genannten Fällen nur zu 30 % berücksichtigt wird, um eine Übersteuerung zu erschweren.

Allgemein sei an dieser Stelle noch angemerkt, dass es selbstverständlich auch möglich ist, die Erhöhung, geringere Anrechnung oder die Warnung variabel in Abhängigkeit des Objektsignals bzw. des Aufmerksamkeitswerts zu gestalten, um auf Situationen verschiedener Kritikalität verschieden stark reagieren zu können.

Das Objektsignal kann zweckmäßigerweise von wenigstens einem anderen Fahrerassistenzsystem, insbesondere einem Längsführungssystem und/oder einem Spurwechselassistenzen, übermittelbar sein. Solche anderen Fahrerassistenzsysteme sind meist, insbesondere durch die Ausstattung mit entsprechenden Sensoren, ohnehin dazu ausgebildet, solche erhabenen Objekte neben der eigenen Fahrspur zu detektieren und gegebenenfalls zu klassifizieren. Das so ermittelte Objektsignal kann beispielsweise über ein Bussystem, insbesondere einen CAN-Bus, an das Fahrerassistenzsystem zur Querführung des Kraftfahrzeugs übermittelt werden.

Grundsätzlich können verschiedene Sensoren zur Ermittlung des Objektsignals dienen. Beispielsweise können wenigstens ein Ultraschallsensor und/oder Radarsensor und/oder Lidarsensor und/oder eine Kamera zur Ermittlung des Objektsignals vorgesehen sein. Insbesondere Ultraschallsensorik eignet sich sehr gut, erhabene Objekte direkt neben einer erkannten Fahrspurmarkierung zu erkennen.

Bezüglich des Aufmerksamkeitswerts kann vorgesehen sein, dass er unter Berücksichtigung der Bedienaktivitäten des Fahrers und/oder von Daten einer Blickrichtungskamera und/oder der Tageszeit und/oder der Fahrtdauer und/oder durch Auswertung des Lenkverhaltens ermittelbar ist. Hierzu sind im Stand der Technik verschiedene Möglichkeiten bekannt. Beispielsweise kann durch Beobachtung der Position des Körpers des Fahrers, insbesondere des Kopfes, und/oder durch Abtastung von Bedienelementen und deren Betätigung ermittelt werden, ob der Fahrer seine Aufmerksamkeit auf die Fahraufgabe gerichtet hat oder ob er beispielsweise ein Radio nutzt. Auch in Abhängigkeit von Gaspedalwerten, Lenkwerten oder dergleichen kann ein Müdigkeitswert für den Fahrer bestimmt werden. Auch die Tageszeit und die Fahrtdauer geben wichtige Hinweise auf den Aufmerksamkeitsgrad des Fahrers und können somit zum Aufmerksamkeitswert beitragen.

Wie bereits erwähnt, kann neben der Erschwerung der Deaktivierbarkeit bzw. Übersteuerbarkeit des Gegenlenkmoments oder auch alternativ eine Warnung vorgesehen sein, die parallel zum Gegenlenkmoment ausgegeben wird. In vorteilhafter Ausgestaltung kann hierzu vorgesehen sein, dass die Warnung ein akustisches und/oder ein haptisches Signal ist, insbesondere eine Vibration des Lenkrads zusätzlich zu dem Gegenlenkmoment. Die letztgenannte Ausgestaltung ist besonders zweckmäßig, da das Gegenlenkmoment und die Warnung gemeinsam in ein Signal integriert werden, das bedeutet, dem Fahrer wird sowohl der Gegenlenkvorgang des Fahrerassistenzsystems bewusst, auf den er zusätzlich durch die Vibration des Lenkrads hingewiesen wird. Jedoch sind auch andere Warnungen, gegebenenfalls zusätzlich, denkbar, beispielsweise die Ausgabe eines Geräuschs oder Tons über ein akustisches Warnmittel.

In weiterer Ausgestaltung der vorliegenden Erfindung kann vorgesehen sein, dass das Fahrerassistenzsystem bei Vorliegen des Objektsignals und/oder des einen Grenzwert unterschreitenden Aufmerksamkeitswertes für den Fahrer des Kraftfahrzeugs zusätzlich zum früheren Erzeugen des Gegenlenkmoments ausgebildet ist. In dieser Ausgestaltung kann also zusätzlich zur Erschwerung/Warnung auch der Eingriffszeitpunkt auf einen früheren Wert verschoben werden, das bedeutet, die dem Fahrer zur Verfügung stehende eingriffsfreie Zone wird - zumindest in Richtung eines detektierten Objekts - eingeschränkt. Während Fahrerassistenzsysteme zur Querführung normalerweise so ausgelegt werden, dass die intervenierenden Eingriffe relativ spät gegeben werden, um den Fahrer nicht durch zu frühe bzw. häufige Eingriffe zu bevormunden, kann erfindungsgemäß bei einem schlechten Aufmerksamkeitszustand des Fahrers bzw. bei der Erkennung erhabener Objekte benachbart zur Fahrspurmarkierung dieses Freiheit im Sinne der Fahrsicherheit etwas eingeschränkt werden.

Neben dem Kraftfahrzeug betrifft die vorliegende Erfindung auch ein Verfahren zur Unterstützung eines Fahrers eines Kraftfahrzeugs beim Halten einer Fahrspur, wobei durch ein Fahrerassistenzsystem zur Querführung des Kraftfahrzeugs, insbesondere ein Spurhalteassistenzsystem, ein Gegenlenkmoment bei einem erkannten Verlassen der Spur durch das Kraftfahrzeug erzeugt wird, welches Gegenlenkmoment durch eine gegebenenfalls schwellwertbasierte Aktion, insbesondere ein Handlenkmoment, des Fahrers deaktivierbar und/oder übersteuerbar ist, welches Verfahren sich dadurch auszeichnet, dass das Fahrerassistenzsystem bei Vorliegen eines wenigstens ein außerhalb der aktuell befahrenen Spur befindliches, relevantes Objekt benachbart zu einer Spurmarkierung der aktuellen Spur anzeigenden Objektsignals und/oder eines einen Grenzwert unterschreitenden Aufmerksamkeitswertes für den Fahrer des Kraftfahrzeugs den Schwellwert erhöht und/oder die Aktion zur Übersteuerung geringer anrechnet und/oder eine Warnung parallel zu dem Gegenlenkmoment ausgibt. Das erfindungsgemäße Verfahren ist mithin geeignet, zum Betrieb des Fahrerassistenzsystems zur Querführung in dem erfindungsgemäßen Kraftfahrzeug zu dienen, indem es die bereits in der Beschreibung des Kraftfahrzeugs ausführlich dargelegten Maßnahmen bei Übermüdung des Fahrers oder bei erhabenen Objekten benachbart der Spurmarkierung ermöglicht. Sämtliche diesbezüglichen Ausführungen bei der Beschreibung des Kraftfahrzeugs lassen sich mithin auch auf das erfindungsgemäße Verfahren übertragen, welches zusätzlich zur Fahrsicherheit und Akzeptanz von Fahrerassistenzsystemen beiträgt.

So kann insbesondere vorgesehen sein, dass das Fahrerassistenzsystem das Objektsignal nur bei einer ermittelten möglichen Kollision mit dem Objekt berücksichtigt. Wird demnach - insbesondere durch geeignete Sensoren, beispielsweise Ultraschallsensoren - ein erhabenes, ausgedehntes Objekt, beispielsweise ein anderen Fahrzeug oder eine Leitplanke, dicht neben der Spurmarkierung der aktuellen Fahrspur detektiert, welches sich in einem relevanten longitudinalen Entfernungsbereich zum eigenen Kraftfahrzeug befindet, so wird überprüft, ob bei lateralem Annähern des eigenen Kraftfahrzeugs an die Spurmarkierung oder Passieren derselben eine Kollision mit dem Objekt droht. Nur dann ist eine Modifikation des Eingriffs bzw. eine Warnung erforderlich.

Das Objektsignal kann dabei von wenigstens einem anderen Fahrerassistenzsystem, insbesondere einem Längsführungssystem und/oder einem Spurwechselassistenten, übermittelt werden. Wie dargelegt, verfügen derartige Systeme häufig ohnehin über die geeigneten Sensorik, um erhabene Objekte, die der aktuellen Fahrspur benachbart sind, zu detektieren.

Der Aufmerksamkeitswert hingegen kann unter Berücksichtigung der Bedienaktivitäten des Fahrers und/oder von Daten einer Blickrichtungskamera und/oder der Tageszeit und/oder der Fahrtdauer und/oder durch Auswertung des Lenkverhaltens ermittelt werden.

Als Warnung kann ein akustisches und/oder ein haptisches Signal verwendet werden, wobei eine Vibration des Lenkrads zusätzlich zu dem Gegenlenkmoment bevorzugt wird.

Auch bei dem erfindungsgemäßen Verfahren ist es möglich, dass das Fahrerassistenzsystem bei Vorliegen des Objektsignals und/oder des einen Grenzwert unterschreitenden Aufmerksamkeitswertes für den Fahrer des Kraftfahrzeugs zusätzlich das Gegenlenkmoment früher erzeugt. In diesem Fall wird also der Eingriffszeitpunkt mehr zur Mitte der aktuellen Fahrspur hin bzw. hin zu größeren Zeiten bis zum Erreichen der Spurmarkierung verschoben, so dass das Gegenlenkmoment zeitiger erzeugt werden kann.

Sowohl das erfindungsgemäße Kraftfahrzeug als auch das erfindungsgemäße Verfahren erhöhen vorteilhaft neben der Fahrsicherheit auch die Akzeptanz des Fahrers gegenüber dem Fahrerassistenzsystem, da dieses nun weitere Informationen berücksichtigen kann, um seinen Eingriff zu verändern und/oder zu erweitern.

Weitere Merkmale und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: eine erste Variante einer schwellwertbasierten Aktion des Fah- rers zum Deaktivieren des Gegenlenkmoments,
- Fig. 3: eine zweite Variante einer schwellwertbasierten Aktion des Fahrers zum Deaktivieren des Gegenlenkmoments,
- Fig. 4: eine Variante zur Übersteuerung durch Anrechnung eines Handlenkmoments, und
- Fig. 5: eine mögliche Ausgestaltung einer Warnung.

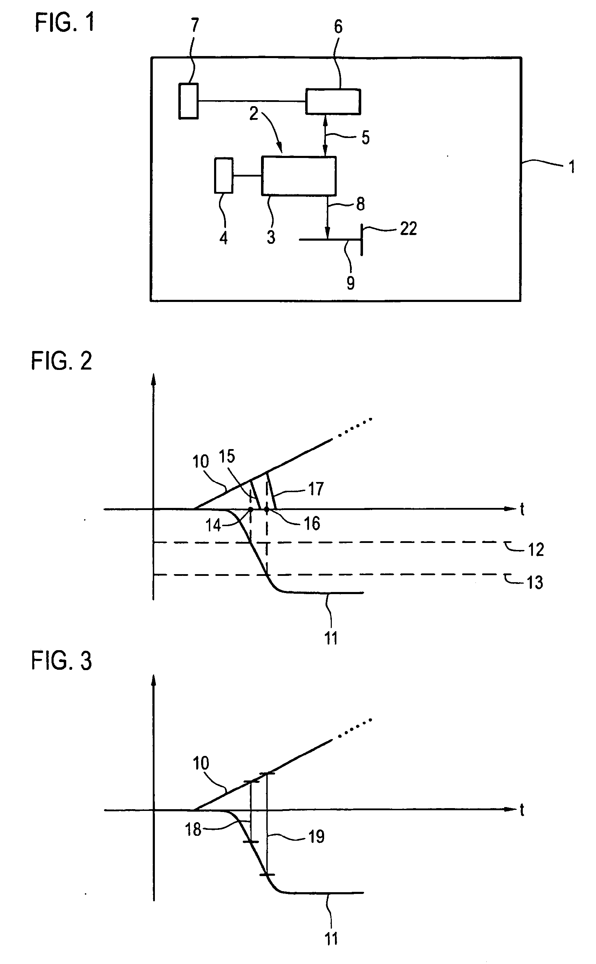

Fig. 1 zeigt eine Prinzipskizze eines erfindungsgemäßen Kraftfahrzeugs 1. Es umfasst ein Spurhalteassistenzsystem 2 als Fahrerassistenzsystem zur Querführung des Kraftfahrzeugs 1. Das Spulhalteassistenzsystem 2 umfasst ein Steuergerät 3 sowie eine geeignete Sensorik 4. Über ein bei 5 angedeutetes Bussystem ist eine Kommunikation des Spurhalteassistenzsystems 2 mit weiteren Fahrzeugsystemen 6 möglich. Solche weiteren Fahrzeugsysteme 6 können beispielsweise andere Fahrerassistenzsysteme umfassen, beispielsweise Spurwechselassistenten oder Längsführungssysteme, denen beispielsweise Ultraschallsensoren 7 zugeordnet sein können, aber auch andere Steuergeräte, beispielsweise ein Steuergerät, das einen Aufmerksamkeitswert ermittelt, der die aktuelle Aufmerksamkeit des Fahrers angibt.

Das Spurhalteassistenzsystem 2 ist nun dazu ausgebildet, wie durch den Pfeil 8 angedeutet wird, Eingriff auf das Lenksystem 9 zu nehmen, wenn bestimmte Bedingungen erfüllt sind, insbesondere ein Eingriffszeitpunkt erreicht ist. Zum Ermitteln des Eingriffszeitpunkts kann beispielsweise die Zeit bis zum Erreichen einer erkannten Spurmarkierung durch das Kraftfahrzeug 1 betrachtet werden, die dann mit einer Grenze verglichen wird. Analog ist es selbstverständlich auch möglich, verschieden definierte Abstände zur Spurmarkierung zu betrachten, um den Eingriffszeitpunkt zu ermitteln. Letztlich zeichnet sich der Eingriffszeitpunkt dadurch aus, dass ein Verlassen der aktuellen Fahrspur durch das Kraftfahrzeug 1 droht.

Dann wird durch das Spurhalteassistenzsystem 2 ein Gegenlenkmoment in das Lenksystem 9 gegeben, das so gerichtet ist, dass das Kraftfahrzeug 1 dennoch in der aktuellen Fahrspur verbleiben soll.

Bei dem Spurhalteassistenzsystem 2 ist es nun ferner möglich, dass durch eine fahrerseitige Aktion, hier ein Handlenkmoment, dieses Gegenlenkmoment wieder deaktivierbar oder übersteuerbar ist. Der Fahrer kann also durch entsprechendes händisches Lenken dennoch ein Verlassen der aktuellen Fahrspur ermöglichen.

Bei dem erfindungsgemäßen Kraftfahrzeug 1 wird die Funktionalität des Spurhalteassistenzsystems 2 nun jedoch dadurch erweitert, dass weitere Informationen berücksichtigt werden, um den Lenkeingriff in Form des Gegenlenkmoments zu modifizieren und/oder um die Ausgabe einer Warnung zu erweitern.

Dazu wird zum einen ein Objektsignal berücksichtigt. Dieses gibt an, ob außerhalb der aktuell befahrenen Spur, aber benachbart zu einer erkannten Spurmarkierung der aktuellen Spur ein relevantes erhabenes Objekt vorhanden ist, das sich folglich in einem bestimmten relevanten longitudinalen Entfernungsbereich zum Kraftfahrzeug 1 befindet, so dass bei lateralem Annähern des Kraftfahrzeugs 1 an die Spurmarkierung und Passieren derselben eine Kollision mit dem Objekt droht. Ein solches Objekt kann beispielsweise eine Leitplanke, Vegetation oder auch ein auf einer Nachbarspur befindliches weiteres Kraftfahrzeug sein. Vorliegend wird das Objektsignal aufgrund von Daten der Ultraschallsensoren 7 bestimmt, jedoch sind auch andere Sensorarten, beispielsweise wenigstens ein Radarsensor bzw. wenigstens ein Lidarsensor oder eine Kamera denkbar. Während im vorliegenden Fall die Daten der Ultraschallsensoren 7 durch ein weiteres Fahrerassistenzsystem ausgewertet werden, um dann an das Spurhalteassistenzsystem 2 übermittelt zu werden, ist es selbstverständlich auch denkbar, dass das Objektsignal durch das Spurhalteassistenzsystem 2 selbst ermittelt wird.

Neben dem Objektsignal wird auch ein Aufmerksamkeitswert ermittelt, der angibt, wie viel Aufmerksamkeit der Fahrer seiner Fahraufgabe gerade widmet. Dieser Aufmerksamkeitswert, der beispielsweise von einem bestimmten Steuergerät ermittelt werden kann, wird unter Berücksichtigung der Bedienaktivitäten des Fahrers, von Daten einer Blickrichtungskamera, der Tageszeit, der Fahrtdauer und durch Auswertung des Lenkverhaltens ermittelt. Selbstverständlich sind auch andere Varianten denkbar.

Diese zusätzlichen Informationen - das Objektsignal und der Aufmerksamkeitswert - werden nun durch das Spurhalteassistenzsystem 2 berücksichtigt. Liegt ein Objektsignal vor und/oder unterschreitet der Aufmerksamkeitswert des Fahrers einen vorgegebenen Grenzwert, so kann beim Spurhalteassistenzsystem 2 ein Schwellwert erhöht werden, wenn die fahrerseitige Aktion zur Deaktivierung des Gegenlenkmoments schwellwertbasiert ist, bei Übersteuerung durch ein Handlenkmoment kann das Handlenkmoment geringer auf das Gegenlenkmoment angerechnet werden oder es kann parallel zu dem Querführungseingriff, also dem Gegenlenkmoment, eine Warnung erzeugt werden. Anhand konkreter Beispiele ist dies in den Figuren 2 - 4 dargestellt.

Fig. 2 zeigt einen Graphen, in dem das Lenkmoment über der Zeit t aufgetragen ist. Während die Kurve 10 den Verlauf eines Gegenlenkmoments zeigt, beschreibt die Kurve 11 ein entgegengerichtetes Handlenkmoment des Fahrers. Eingezeichnet sind weiterhin zwei Schwellwerte 12, 13.

Im Normalbetrieb, wenn also kein Objektsignal vorliegt und der Aufmerksamkeitswert oberhalb des Grenzwertes liegt, ist der Schwellwert 12 relevant. Wird er durch den Betrag des Handlenkmoments erreicht, Punkt 14, wird das Gegenlenkmoment deaktiviert, Rampe 15. Liegt nun jedoch ein Objektsignal vor oder unterschreitet der Aufmerksamkeitswert den Grenzwert, ist der Schwellwert 13 relevant. Erst bei seinem Erreichen, Punkt 16, wird in diesem Fall das Gegenlenkmoment deaktiviert, Rampe 17. Das Deaktivieren wird also aufgrund der zusätzlichen Informationen in diesem Fall erschwert.

Ein ähnlicher Fall liegt in der Variante gemäß Fig. 3 vor, in der wiederum das Lenkmoment über der Zeit t aufgetragen ist. Die Kurve 10 zeigt wiederum den Verlauf des Gegenlenkmoments, die Kurve 11 den Verlauf des Handlenkmoments. Allerdings wird in diesem Fall nicht der Betrag des Handlenkmoments mit einem Schwellwert verglichen, sondern der Betrag der jeweiligen Differenz 18, 19 des Gegenlenkmoments und des Handlenkmoments. Auch hier wird der Schwellwert erhöht, wenn ein Objektsignal vorliegt oder der Aufmerksamkeitswert des Fahrers den Grenzwert unterschreitet.

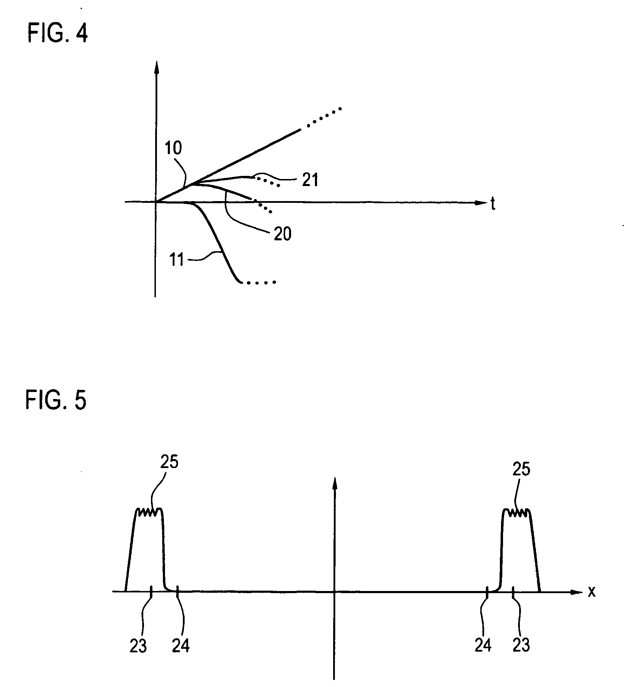

Eine sich auf die Übersteuerbarkeit beziehende Variante zeigt die Fig. 4. Darin bezeichnet wiederum 10 die Kurve des Gegenlenkmoments, 11 die Kurve des Handlenkmoments. In diesem Fall wird jedoch das Handlenkmoment auf das Gegendrehmoment angerechnet, das bedeutet, die Drehmomente werden im Wesentlichen addiert, wobei jedoch auch im Normalzustand - also wenn kein Objektsignal vorliegt oder der Fahrer aufmerksam ist - nur eine Prozentualanrechnung des Handlenkmoments vorgesehen sein kann. Es ergibt sich ein resultierendes Drehmoment im Normalfall, Kurve 20. Liegt nun allerdings ein Objektsignal vor oder unterschreitet der Aufmerksamkeitswert den Grenzwert, so wird das Handlenkmoment geringer angerechnet, beispielsweise nur 30 % des Handlenkmoments, so dass eine schwächere Wirkung des fahrerseitigen Lenkens zu verzeichnen ist, vgl. die Kurve 21. So wird auch hier das Übersteuern erschwert.

Schließlich zeigt Fig. 5 noch eine Möglichkeit zur Ausgabe einer Warnung in Form einer Vibration des Lenkrads 22 des Kraftfahrzeugs 1. So ist in Fig. 5 die Höhe des Gegenlenkmoments gegen die Position x des Kraftfahrzeugs aufgetragen, wobei die Punkte 23 die Spurmarkierungen symbolisieren sollen. Die Punkte 24 stellen die Eingriffszeitpunkte dar. Ersichtlich erfolgt ein Eingriff immer dann, wenn das Kraftfahrzeug 1 die Spurmarkierung zu überschreiten droht. Zusätzlich zu dem Gegenlenkmoment wird hier jedoch auch eine Vibration 25 auf das Lenkrad 22 gegeben, die als Warnung dient. Der Fahrer wird also zusätzlich darauf hingewiesen, dass entweder Gefahr durch ein Objekt droht oder er unaufmerksam ist.

Selbstverständlich sind auch andere Arten von Warnungen denkbar, beispielsweise kann zusätzlich oder alternativ ein Ton ausgegeben werden, wenn die Spurmarkierung überschritten wird oder gar schon am Eingriffszeitpunkt 24.

## Patentansprüche

1. Kraftfahrzeug (1), umfassend ein Fahrerassistenzsystem zur Querführung des Kraftfahrzeugs (1), insbesondere ein Spurhalteassistenzsystem (2), welches Fahrerassistenzsystem zum Erzeugen eines Gegenlenkmomentes bei einem erkannten Verlassen der Spur durch das Kraftfahrzeug (1) ausgebildet ist, welches Gegenlenkmoment durch eine gegebenenfalls schwellwertbasierte Aktion, insbesondere ein Handlenkmoment, des Fahrers deaktivierbar und/oder übersteuerbar ist,
**dadurch gekennzeichnet,**
**dass** das Fahrerassistenzsystem bei Vorliegen eines einen Grenzwert unterschreitenden Aufmerksamkeitswertes für den Fahrer des Kraftfahrzeugs (1) zur Erhöhung des Schwellwerts (12, 13) und/oder zu einer geringeren Anrechnung der Aktion zur Übersteuerung ausgebildet ist.

2. Kraftfahrzeug nach Anspruch 1,
**dadurch gekennzeichnet,**
**dass** das Fahrerassistenzsystem auch bei Vorliegen eines wenigstens ein außerhalb der aktuell befahrenen Spur befindliches, relevantes Objekt benachbart zu einer Spurmarkierung der aktuellen Spur anzeigenden Objektsignals zur Erhöhung des Schwellwerts (12, 13) und/oder zu einer geringeren Anrechnung der Aktion zur Übersteuerung und/oder zur Ausgabe einer Warnung parallel zu dem Gegenlenkmoment ausgebildet ist, und/oder dass das Fahrerassistenzsystem bei Vorliegen eines einen Grenzwert unterschreitenden Aufmerksamkeitswertes für den Fahrer des Kraftfahrzeugs (1) zur Ausgabe einer Warnung parallel zu dem Gegenlenkmoment ausgebildet ist.

3. Kraftfahrzeug nach Anspruch 1 oder 2,
**dadurch gekennzeichnet,**
**dass** das Fahrerassistenzsystem zum Vergleich des Schwellwerts (12, 13) mit einem absoluten Wert für das Handlenkmoment oder einem Differenzbetrag (18, 19) zwischen dem Gegenlenkmoment und dem Handlenkmoment ausgebildet ist.

4. Kraftfahrzeug nach einem der vorangehenden Ansprüche,
**dadurch gekennzeichnet,**
**dass** das Fahrerassistenzsystem zur Berücksichtigung des Objektsignals nur bei einer ermittelten möglichen Kollision mit dem Objekt ausgebildet ist.

5. Kraftfahrzeug nach einem der vorangehenden Ansprüche,
**dadurch gekennzeichnet,**
**dass** das Objektsignal von wenigstens einem anderen Fahrerassistenzsystem, insbesondere einem Längsführungssystem und/oder einem Spurwechselassistenten, übermittelbar ist.

6. Kraftfahrzeug nach einem der vorangehenden Ansprüche,
**dadurch gekennzeichnet,**
**dass** wenigstens ein Ultraschallsensor (7) und/oder Radarsensor und/oder Lidarsensor und/oder eine Kamera zur Ermittlung des Objektsignals vorgesehen sind.

7. Kraftfahrzeug nach einem der vorangehenden Ansprüche,
**dadurch gekennzeichnet,**
**dass** der Aufmerksamkeitswert unter Berücksichtigung der Bedienaktivitäten des Fahrers und/oder von Daten einer Blickrichtungskamera und/oder der Tageszeit und/oder der Fahrtdauer und/oder durch Auswertung des Lenkverhaltens ermittelbar ist.

8. Kraftfahrzeug nach einem der vorangehenden Ansprüche,
**dadurch gekennzeichnet,**
**dass** die Warnung ein akustisches und/oder ein haptisches Signal ist, insbesondere eine Vibration (25) des Lenkrads (22) zusätzlich zu dem Gegenlenkmoment.

9. Kraftfahrzeug nach einem der vorangehenden Ansprüche,
**dadurch gekennzeichnet,**
**dass** das Fahrerassistenzsystem bei Vorliegen des Objektsignals und/oder des einen Grenzwert unterschreitenden Aufmerksamkeitswertes für den Fahrer des Kraftfahrzeugs (1) zusätzlich zum früheren Erzeugen des Gegenlenkmoments ausgebildet ist.

10. Verfahren zur Unterstützung eines Fahrers eines Kraftfahrzeugs beim Halten einer Fahrspur, wobei durch ein Fahrerassistenzsystem zur Querführung des Kraftfahrzeugs, insbesondere ein Spurhalteassistenzsystem, ein Gegenlenkmoment bei einem erkannten Verlassen der Spur durch das Kraftfahrzeug erzeugt wird, welches Gegenlenkmoment durch eine gegebenenfalls schwellwertbasierte Aktion, insbesondere ein Handlenkmoment, des Fahrers deaktivierbar und/oder übersteuerbar ist,
**dadurch gekennzeichnet,**
**dass** das Fahrerassistenzsystem bei Vorliegen eines einen Grenzwert unterschreitenden Aufmerksamkeitswertes für den Fahrer des Kraftfahrzeugs den Schwellwert erhöht und/oder die Aktion zur Übersteuerung geringer anrechnet.

11. Verfahren nach Anspruch 10,
**dadurch gekennzeichnet,**
**dass** das Fahrerassistenzsystem bei Vorliegen eines wenigstens ein außerhalb der aktuell befahrenen Spur befindliches, relevantes Objekt benachbart zu einer Spurmarkierung der aktuellen Spur anzeigenden Objektsignals den Schwellwert erhöht und/oder die Aktion zur Übersteuerung geringer anrechnet und/oder eine Warnung parallel zu dem Gegenlenkmoment ausgibt, und/oder das Fahrerassistenzsystem bei Vorliegen eines einen Grenzwert unterschreitenden Aufmerksamkeitswertes für den Fahrer des Kraftfahrzeugs eine Warnung parallel zu dem Gegenlenkmoment ausgibt.

12. Verfahren nach Anspruch 10 oder 11,
**dadurch gekennzeichnet,**
**dass** das Fahrerassistenzsystem den Schwellwert mit einem absoluten Wert für das Handlenkmoment oder einem Differenzbetrag zwischen dem Gegenlenkmoment und dem Handlenkmoment vergleicht.

13. Verfahren nach einem der Ansprüche 10 bis 12,
**dadurch gekennzeichnet,**
**dass** das Fahrerassistenzsystem das Objektsignal nur bei einer ermittelten möglichen Kollision mit dem Objekt berücksichtigt.

14. Verfahren nach einem der Ansprüche 10 bis 13,
**dadurch gekennzeichnet,**
**dass** das Objektsignal von wenigstens einem anderen Fahrerassistenzsystem, insbesondere einem Längsführungssystem und/oder einem Spurwechselassistenten, übermittelt wird.

15. Verfahren nach einem der Ansprüche 10 bis 14,
**dadurch gekennzeichnet,**
**dass** der Aufmerksamkeitswert unter Berücksichtigung der Bedienaktivitäten des Fahrers und/oder von Daten einer Blickrichtungskamera und/oder der Tageszeit und/oder der Fahrtdauer und/oder durch Auswertung des Lenkverhaltens ermittelt wird.

16. Verfahren nach einem der Ansprüche 10 bis 15,
**dadurch gekennzeichnet,**
**dass** als Warnung ein akustisches und/oder ein haptisches Signal verwendet wird, insbesondere eine Vibration des Lenkrads zusätzlich zu dem Gegenlenkmoment.

17. Verfahren nach einem der Ansprüche 10 bis 16,
**dadurch gekennzeichnet,**
**dass** das Fahrerassistenzsystem bei Vorliegen des Objektsignals und/oder des einen Grenzwert unterschreitenden Aufmerksamkeitswertes für den Fahrer des Kraftfahrzeugs zusätzlich das Gegenlenkmoment früher erzeugt.

## Claims

1. Motor vehicle (1), comprising a driver assistance system for transverse guidance of the motor vehicle (1), in particular a lane-keeping assistance system (2), which driver assistance system is formed to produce a counter steering moment in the event of an identified departure from the lane by the motor vehicle (1), which counter steering moment can be deactivated and/or overridden by an optionally threshold-value-based action, in particular a manual steering moment, of the driver, **characterised in that** the driver assistance system is formed to increase the threshold value (12, 13) and/or to take less account of the action for overriding when there is an attention value for the driver of the motor vehicle (1) which is below a limit value.

2. Motor vehicle according to claim 1, **characterised in that** the driver assistance system is also formed to increase the threshold value (12, 13) and/or to take less account of the action for overriding and/or to emit a warning parallel to the counter steering moment when there is an object signal indicating at least one relevant object which is located outside the current lane of travel, adjacent to a lane marking of the current lane, and/or **in that** the driver assistance system is formed to emit a warning parallel to the counter steering moment when there is an attention value for the driver of the motor vehicle (1) which is below a limit value.

3. Motor vehicle according to either claim 1 or claim 2, **characterised in that** the driver assistance system is formed to compare the threshold value (12, 13) with an absolute value for the manual steering moment or with a difference (18, 19) between the counter steering moment and the manual steering moment.

4. Motor vehicle according to any one of the preceding claims, **characterised in that** the driver assistance system is formed to consider the object signal only in the event of a detected possible collision with the object.

5. Motor vehicle according to any one of the preceding claims, **characterised in that** the object signal can be transmitted by at least one other driver assistance system, in particular a longitudinal guidance system and/or a lane-change assistant.

6. Motor vehicle according to any one of the preceding claims, **characterised in that** at least one ultrasonic sensor (7) and/or radar sensor and/or lidar sensor and/or a camera are provided for detecting the object signal.

7. Motor vehicle according to any one of the preceding claims, **characterised in that** the attention value can be determined by considering the operating activities of the driver and/or data from a viewing direction camera and/or the time of day and/or the length of journey and/or by evaluating the steering behaviour.

8. Motor vehicle according to any one of the preceding claims, **characterised in that** the warning is an acoustic and/or a haptic signal, in particular a vibration (25) of the steering wheel (22) in addition to the counter steering moment.

9. Motor vehicle according to any one of the preceding claims, **characterised in that** the driver assistance system is also formed to produce the counter steering moment earlier when there is the object signal and/or the attention value for the driver of the motor vehicle (1) which is below a limit value.

10. Method for assisting a driver of a motor vehicle in keeping to a traffic lane, a counter steering moment being produced by a driver assistance system for transverse guidance of the motor vehicle, in particular a lane-keeping assistance system, in the event of an identified departure from the lane by the motor vehicle, which counter steering moment can be deactivated and/or overridden by an optionally threshold-value-based action, in particular a manual steering moment, of the driver, **characterised in that** the driver assistance system increases the threshold value and/or takes less account of the action for overriding when there is an attention value for the driver of the motor vehicle which is below a limit value.

11. Method according to claim 10, **characterised in that** the driver assistance system increases the threshold value and/or takes less account of the action for overriding and/or emits a warning parallel to the counter steering moment when there is an object signal indicating at least one relevant object which is located outside the current lane of travel, adjacent to a lane marking of the current lane, and/or the driver assistance system emits a warning parallel to the counter steering moment when there is an attention value for the driver of the motor vehicle which is below a limit value.

12. Method according to either claim 10 or claim 11, **characterised in that** the driver assistance system compares the threshold value with an absolute value for the manual steering moment or with a difference between the counter steering moment and the manual steering moment.

13. Method according to any one of claims 10 to 12, **characterised in that** the driver assistance system considers the object signal only in the event of a detected possible collision with the object.

14. Method according to any one of claims 10 to 13, **characterised in that** the object signal can be transmitted by at least one other driver assistance system, in particular a longitudinal guidance system and/or a lane-change assistant.

15. Method according to any one of claims 10 to 14, **characterised in that** the attention value is determined by considering the operating activities of the driver and/or data from a viewing direction camera and/or the time of day and/or the length of journey and/or by evaluating the steering behaviour.

16. Method according to any one of claims 10 to 15, **characterised in that** the warning is an acoustic and/or a haptic signal, in particular a vibration of the steering wheel in addition to the counter steering moment.

17. Method according to any one of claims 10 to 16, **characterised in that** the driver assistance system also produces the counter steering moment earlier when there is the object signal and/or the attention value for the driver of the motor vehicle which is below a limit value.

## Revendications

1. Véhicule automobile (1), comprenant un système d'assistance au conducteur pour le guidage transversal du véhicule automobile (1), en particulier un système d'assistance au maintien de la voie (2), lequel système d'assistance au conducteur est conformé pour générer un moment de contrebraquage lors d'une sortie de voie identifiée par le véhicule automobile (1), lequel moment de contrebraquage peut être désactivé et/ou surmodulé par une action s'appuyant éventuellement sur une valeur de seuil, en particulier unmoment de braquage manuel, du conducteur,
**caractérisé en ce que**
le système d'assistance au conducteur est conformé, en cas d'existence d'une valeur d' attention située en dessous d'une valeur limite pour le conducteur du véhicule automobile (1), pour augmenter la valeur de seuil (12, 13) et/ou imputer plus faiblement l'action à la surmodulation.

2. Véhicule automobile selon la revendication 1,
**caractérisé en ce que**
le système d'assistance au conducteur est conformé également, en cas d'existence d'un signal d'objet indiquant au moins un objet important, situé en dehors de la voie de circulation actuelle, voisin d' un marquage de la voie de circulation actuelle pour augmenter la valeur de seuil (12, 13) et/ou imputer plus faiblement l'action à la surmodulation et/ou délivrer un avertissement en parallèle avec le moment de contrebraquage, et/ou **en ce que** le système d'assistance au conducteur est conformé, en cas d'existence d'une valeur d'attention située en dessous d'une valeur limite pour le conducteur du véhicule automobile (1), pour délivrer un avertissement en parallèle avec le moment de contrebraquage.

3. Véhicule automobile selon la revendication 1 ou 2,
**caractérisé en ce que**
le système d'assistance au conducteur est conformé pour comparer la valeur de seuil (12, 13) à une valeur absolue pour le moment de braquage manuel ou à une valeur de différence (18, 19) entre le moment de contrebraquage et le moment de braquage manuel.

4. Véhicule automobile selon l'une quelconque des revendications précédentes, **caractérisé en ce que**
le système d'assistance au conducteur est conformé pour tenir compte du signal d'objet uniquement en cas d'une éventuelle collision déterminée avec l'objet.

5. Véhicule automobile selon l'une quelconque des revendications précédentes, **caractérisé en ce que**
le signal d'objet peut être transmis par au moins un autre système d'assistance au conducteur, en particulier un système de guidage longitudinal et/ou un assistant de changement de voie.

6. Véhicule automobile selon l'une quelconque des revendications précédentes, **caractérisé en ce que**
l'on prévoit un capteur à ultrasons (7) et/ou un capteur radar et/ou un capteur de type Lidar et/ou une caméra pour déterminer le signal d'objet.

7. Véhicule automobile selon l'une quelconque des revendications précédentes, **caractérisé en ce que** la valeur d'attention peut être déterminée en tenant compte des activités de manoeuvre du conducteur et/ou de données d'une caméra de direction de visée et/ou du moment de la journée et/ou de la durée de conduite et/ou en exploitant le comportement de conduite.

8. Véhicule automobile selon l'une quelconque des revendications précédentes,
**caractérisé en ce que**
l'avertissement est un signal acoustique et/ou un signal haptique, en particulier une vibration (25) du volant (22) en complément du moment de contrebraquage.

9. Véhicule automobile selon l'une quelconque des revendications précédentes, **caractérisé en ce que** le système d'assistance au conducteur est conformé, en cas d'existence du signal d'objet et/ou de la valeur d'attention située en dessous d'une valeur limite pour le conducteur du véhicule automobile (1), en complément, pour générer plus tôt le moment de contrebraquage.

10. Procédé pour aider un conducteur d'un véhicule automobile à maintenir une voie de circulation, dans lequel un moment de contrebraquage en cas de sortie de la voie identifiée par le véhicule automobile est généré par un système d'assistance au conducteur pour le guidage transversal du véhicule automobile, en particulier un système d'assistance au maintien de la voie, lequel moment de contrebraquage peut être désactivé et/ou surmodulé par une action s'appuyant éventuellement sur une valeur de seuil, en particulier un moment de braquage manuel, du conducteur,
**caractérisé en ce que**,
en cas d'existence d'une valeur d'attention située en dessous d'une valeur limite pour le conducteur du véhicule automobile, le système d'assistance au conducteur augmente la valeur de seuil et/ou impute plus faiblement l'action à la surmodulation.

11. Procédé selon la revendication 10,
**caractérisé en ce que**,
en cas d'existence d'un signal d'objet indiquant au moins un objet important, situé en dehors de la voie de circulation actuelle, voisin d'un marquage de la voie de circulation actuelle, le système d'assistance au conducteur augmente la valeur de seuil et/ou impute plus faiblement l'action à la surmodulation et/ou délivre un avertissement en parallèle avec le moment de contrebraquage, et/ou, en cas d'existence d'une valeur d'attention située en dessous d'une valeur limite pour le conducteur du véhicule automobile, le système d'assistance au conducteur délivre un avertissement en parallèle avec le moment de contrebraquage.

12. Procédé selon la revendication 10 ou 11,
**caractérisé en ce que**
le système d'assistance au conducteur compare la valeur de seuil à une valeur absolue pour le moment de braquage manuel ou à une valeur de différence entre le moment de contrebraquage et le moment de braquage manuel.

13. Procédé selon l'une quelconque des revendications 10 à 12,
**caractérisé en ce que**
le système d'assistance au conducteur tient compte du signal d'objet uniquement en cas d'une collision éventuelle déterminée avec l'objet.

14. Procédé selon l'une quelconque des revendications 10 à 13,
**caractérisé en ce que**
le signal d'objet est transmis par au moins un autre système d'assistance au conducteur, en particulier un système de guidage longitudinal et/ou un assistant de changement de voie.

15. Procédé selon l'une quelconque des revendications 10 à 14,
**caractérisé en ce que**
la valeur d'attention peut être déterminée en tenant compte des activités de manoeuvre du conducteur et/ou des données d'une caméra de direction de visée et/ou du moment de la journée et/ou de la durée de conduite et/ou en exploitant le comportement de conduite.

16. Procédé selon l'une quelconque des revendications 10 à 15,
**caractérisé en ce que**,
comme avertissement, on utilise un signal acoustique et/ou haptique, en particulier une vibration du volant en complément du moment de contrebraquage.

17. Procédé selon l'une quelconque des revendications 10 à 16,
**caractérisé en ce que**
le système d'assistance au conducteur génère en outre plus tôt le moment de contrebraquage en cas d'existence du signal d'objet et/ou de la valeur d'attention située en dessous d'une valeur limite pour le conducteur du véhicule automobile.
